# EUROPEAN PATENT APPLICATION

(11) **EP 0 592 961 A1**
(43) Date of publication of application: **20.04.1994**
(21) Application number: 93116349.7
(22) Date of filing: 08.10.1993
(51) Int. Cl.: B21F 11/00, B23D 23/00

(54) **Apparatus and method for forming needle blanks from wire stock**

(30) Priority: 09.10.1992 US 959154
(71) Applicant: United States Surgical Corporation, Norwalk, Connecticut 06856 (US)
(72) Inventor: Smith, Richard J., West Haven, CT 06516 (US)
(74) Representative: Marsh, Roy David

(57) **Abstract**

Apparatus (10) for cutting needle blanks from wire stock comprising a cutting tool assembly (14) having first (38) and second (48) support members being movable relative to each other; first cutting tool element (76) retained in the first support member and having a longitudinal bore (37) therein configured and dimensioned to receive a length of wire stock; second cutting tool element (54) disposed in the second support member and having a longitudinal bore (55) therein; wherein the first and second cutting tool elements are movable between a receiving position wherein the longitudinal bores of the first and second tool elements are in substantial axial alignment defining a continuous wire path therethrough and a sheared position wherein the longitudinal bores define parallel discontinuous passages, the first and second cutting elements being movable in response to impact forces supplied to the first and second support members sufficient such that the first and second support members are moved to the sheared position. In another embodiment, one of the cutting tool elements is fixed relative to an impact press (12) while the other cutting tool is movable in response to an impact force supplied by the impact press. A method is also provided for forming needle blanks from wire stock including the steps of providing a cutting tool assembly inserting a length of wire stock into and through said elongated bore; and imparting an impact force on said first and second cutting tool elements sufficient such that said first and second cutting tools are moved to said sheared position.

## Description

### BACKGROUND OF THE INVENTION

### 1. Field of the Invention

This invention relates to apparatus and methods for forming needle blanks from wire stock and, more particularly, to apparatus and methods for shearing needle blanks from continuous wire stock.

### 2. Description of the Related Art

The production of quality needles from raw stock involves many different processes and machines. The precision and quality control for these varying processes and machines become even more important in the preparation of surgical needles for use in humans or animals. Some of the processes involved in the production of surgical grade needles include, *inter alia:* straightening spooled wire stock; cutting needle blanks from raw stock; providing a suture retaining portion at one end of the blanks; tapering or grinding points at the other end of the blanks, pressing a portion of the needle barrels to facilitate easier grasping by surgical instrumentation; and, where curved needles are desired, curving the needles. During each of these several steps, care must be taken to ensure that only the intended working of the needles is performed and that the needles remain otherwise undisturbed.

The process of cutting needle blanks from raw stock involves cutting a continuous length of wire, which has been removed from a spool and straightened, into segments each having a predetermined length. Methods and apparatus which have been previously used include, for example, chopping off the blanks from the wire stock with a reciprocating blade arrangement or by using an hydraulic press to operate a chopping mechanism. One disadvantage with these previous methods and apparatus is that when the cuts are made to form the needle blanks, deformations are created near the ends of the material. These deformations may be in the configuration of the end, *e.g.*, burs or stretch points; or they may be in the material characteristics themselves, *e.g.*, the tensile strength or the hardness, among others.

While many of the deformations to the configuration of the needle blanks can be corrected by additional processing steps, such as by grinding the ends to remove the burs, the deformations of the material characteristics are generally not correctable. This may result in a greater number of failures of the needles, particularly when a length of suture material is attached at one end.

A need, therefore exists for apparatus and method for forming needle blanks from continuous wire stock which avoids the above mentioned and other disadvantages of the prior apparatus and methods.

### SUMMARY OF THE INVENTION

The present invention provides a novel apparatus for cutting needle blanks from wire stock which will avoid the disadvantages of the prior art. The apparatus includes a cutting tool assembly having first and second support members being movable relative to each other; first cutting tool element retained in the first support member and having a longitudinal bore therein configured and dimensioned to receive a length of wire stock; second cutting tool element disposed in the second support member and having a longitudinal bore therein; wherein the first and second cutting tool elements being movable between a receiving position wherein the longitudinal bores of the first and second tool elements are in substantial axial alignment defining a continuous wire path therethrough and a sheared position wherein the longitudinal bores define a parallel discontinuous passage, the first and second cutting elements being movable in response to impact forces supplied to the first and/or second support members sufficient such that the support members are moved to the sheared position. Alternatively, one of the cutting elements may be fixed to the base portion of an impact press and the other cutting element may be movable in response to an impact force received from the impact press.

In one embodiment, the longitudinal bores of the first and second cutting tool elements are configured and dimensioned such that the wire stock is slidable therethrough with minimal clearance and are replaceable. Preferably, the clearance between the wire stock and the bores of the cutting tool elements is in the range of 0.0001 to 0.0010 inches.

A method for forming needle blanks from wire stock is also provided which includes the steps of providing a cutting tool assembly having first and second support members being movable relative to each other;
first cutting tool element retained in the first support member and having a longitudinal bore therein configured and dimensioned to receive a length of wire stock; second cutting tool element disposed in the second support member and having a longitudinal bore therein;
wherein the first and second cutting tool elements being movable between a receiving position wherein the longitudinal bores of the first and second tool elements are in substantial axial alignment defining a continuous wire path therethrough and a sheared position wherein the longitudinal bores define a parallel discontinuous passage, the first and second cutting elements being movable in response to impact forces supplied to the first and/or second support members sufficient such that the support members are moved to the sheared position;
inserting a length of wire stock into and through the elongated bore; and imparting an impact force on at least one of the cutting tool elements sufficient such that the cutting tools are moved to the sheared position.

### BRIEF DESCRIPTION OF THE DRAWINGS

Preferred embodiments of the invention are described hereinbelow with reference to the drawings wherein:
Fig. 1 is a perspective view of the apparatus of the present invention;
Fig. 2 is a partially cut-away elevation view illustrating the cutting tool assembly of the apparatus of Fig. 1;
Fig. 3 is a cross-sectional view taken along the line 3-3 of Fig. 2;
Fig. 4 is a perspective view of the moving cutting element of the invention;
Fig. 5A is a partial cross-sectional view of the two cutting tool elements of the invention;
Fig. 5B is a cross-sectional view similar to Fig. 5a illustrating the moving cutting tool element in its downwardly displaced position.

### DETAILED DESCRIPTION OF THE PREFERRED EMBODIMENTS

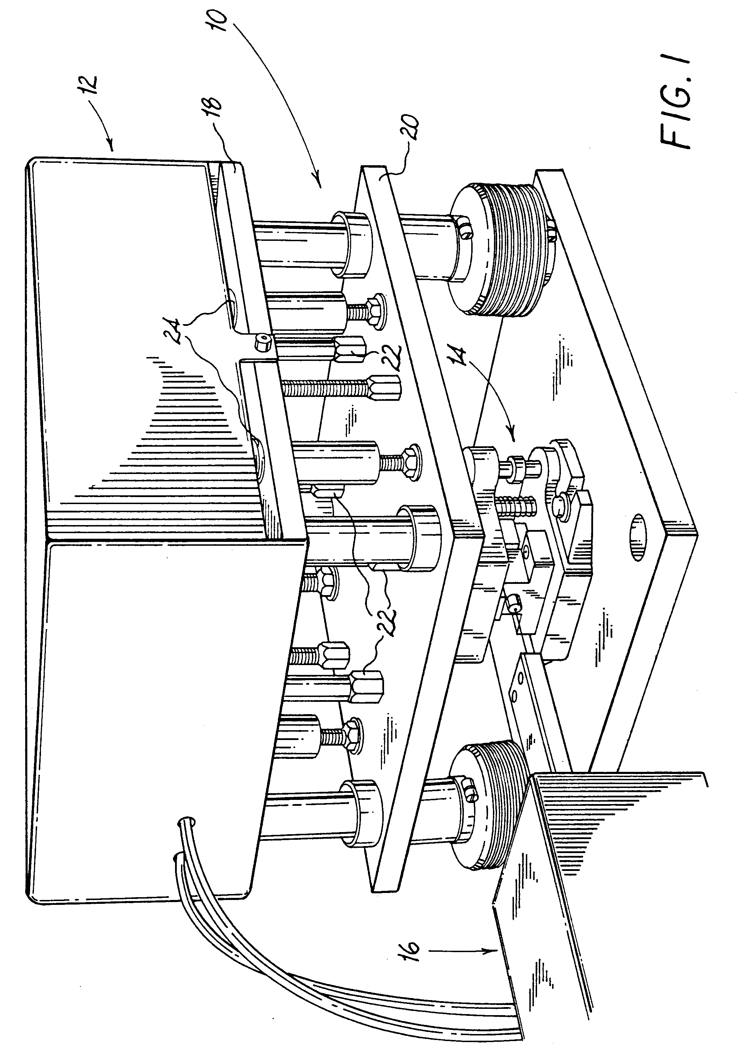

Referring initially to Fig. 1, one embodiment of an apparatus for cutting elongated work stock in accordance with the present invention is shown generally at 10. Apparatus 10 is particularly adapted for forming needle blanks from continuous wire stock.

Generally, apparatus 10 includes high velocity impact press 12, cutting tool assembly 14, and wire supply feed assembly 16. A suitable high velocity impact press which may utilized is the model 200-OH, available from Lourdes Systems, Inc., Hauppauge, New York.

Briefly, the Lourdes model 200-OH device is an electromagnetically operated impact press which uses tractive solenoids. The device is activated by electrical current supplied to a coil structure creating a magnetic field which accelerates an armature. The armature is slidably mounted in top plate 18 and connected to motion plate 20 by armature supports 22. Upon activation, the armature is driven downward, thereby accelerating motion plate 20 downward at a rate of approximately thirty times the acceleration due to gravity. For the Lourdes model 200-OH, the force created by the motion plate at 0.030 inches above its bottom-most position is approximately twenty (20) tons. While this force has been found effective, other amounts of effective force may also be used to sufficiently shear needle blanks without substantially altering the material characteristics near the sheared ends. Upon deactivation of the solenoid, return springs 24 bias motion plate 20 back upward to the receiving position.

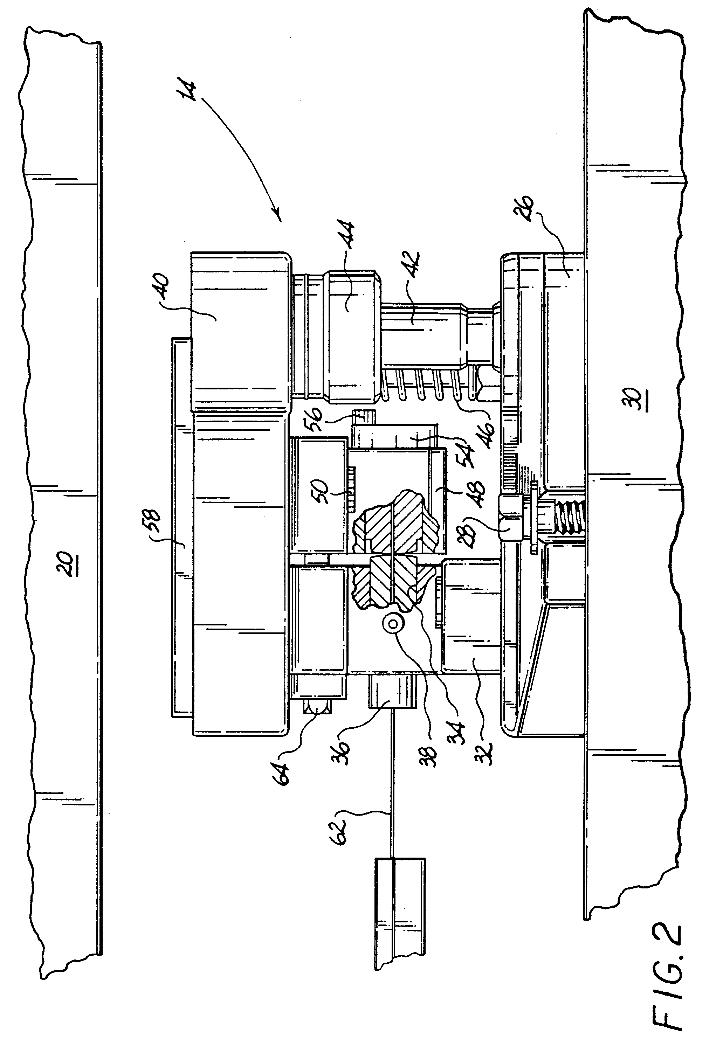

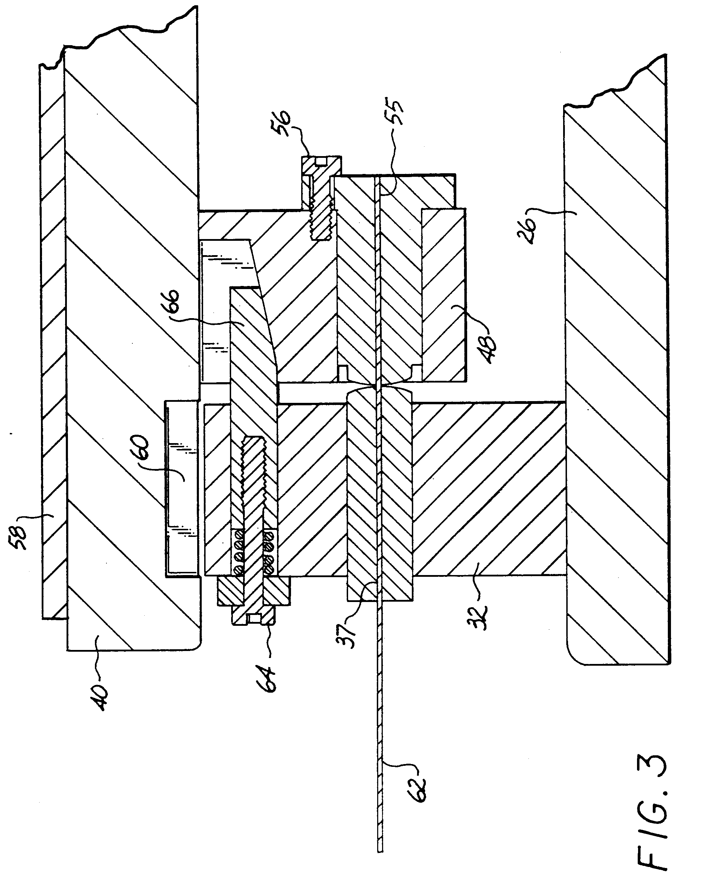

Referring to Figs. 2 and 3, cutting tool assembly 14 will now be discussed in detail. Generally, cutting tool assembly 14 comprises a base plate 26 rigidly secured by bolts 28 or any other suitable fastening means, to high velocity impact press 12 at frame plate 30. Fixed support member 32 is mounted rigidly to base plate 26, or in an alternative embodiment, may be formed integrally therewith. Longitudinal bore 34 is provided in fixed support member 32 and is configured and dimensioned to receive and retain cutting tool element 36 by set screw 38. Other methods such as, providing cooperating threads on fixed support member 32 and cutting tool element 36 may also be utilized to retain cutting tool element 36 within longitudinal bore 34.

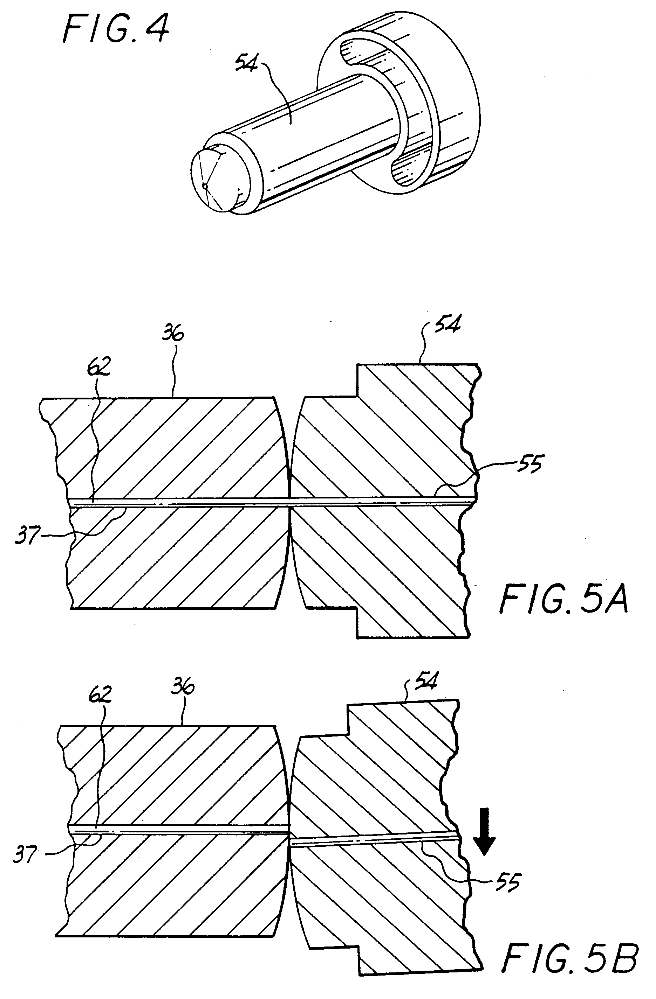

Platform 40 is positioned above fixed support member 32 and is slidably mounted relative to base plate 26. Proper alignment of fixed support member 32 relative to platform 40 is provided by the cooperative action of fixed guide post 42 within bearing 44. Return spring 46 is provided to bias platform 40 in its upward most position. Movable support member 48 (Fig. 4) is mounted to platform 40 by mounting bolt 50. Longitudinal bore 52 is provided in movable support member 48 and is configured and dimensioned to receive cutting tool element 54. Set screw 56 is provided to mount cutting tool element 54 within movable support member 48. Alternatively, movable support member 48 and cutting tool element 54 may be provided with cooperating threads so that cutting tool element 54 may be threadably mounted in movable support member 48. Platform 40 is further provided with strike plate 58 for receiving and transmitting an impact force from motion plate 20 of high velocity impact press 12. To prevent platform 40 from contacting fixed support member 32 upon downward motion, cavity 60 (Fig. 3) is provided in movable platform 40 and is configured and dimensioned to receive the top of fixed support member 32 therein.

Cutting tool elements 36 and 54 are provided with longitudinal bores 37 and 55, respectively. Although cutting tool elements 36 and 54 are illustrated as being generally cylindrical other suitable geometries may also be utilized. Where different geometry cutting tool elements are utilized the bore formed in the fixed and movable support members should be of a corresponding shape. Each bore is configured and dimensioned to receive a supply of wire 62 with the minimal amount of clearance that will allow wire 62 to slide through. One range of clearance between bores 37 and 55 and wire stock 62 is 0.0001 to 0.0010 inches. A preferred range is 0.0003 to 0.0006 inches clearance over the diameter of wire stock 62.

In order to form needle blanks of other diameters, interchangeable matching pairs of fixed cutting tool elements and movable cutting tool elements may be provided which have longitudinal bores formed therein with diameters differing from those of the other cutting tool elements provided. In order to assure that the longitudinal bore of movable cutting tool element 54 is aligned with that of fixed cutting tool element 36 (Fig. 5A) adjusting screw 64 is provided on fixed cutting tool holder 32 and is operatively mounted to move slide 66 in rectilinear motion thereby raising or lowering movable cutting tool holder 48 when mounting bolt 50 is loosened.

While the above embodiment relates only to one movable tool element, it is envisioned that an embodiment may be provided wherein two tool elements are movable relative to each other in response to impact forces being applied to at least on of the tool elements. In this manner, only half the impact force necessary for single sided operation, is necessary on each side, to sufficiently form the needle blanks without substantially affecting of the material characteristics thereof.

### OPERATION

To form elongated needle blanks by using needle blank cutting apparatus 10, a length of previously straightened wire is inserted into longitudinal bore 37 of fixed cutting tool element 36 and is urged through longitudinal bore 55 of movable cutting tool element 54. Preferably, the wire is incrementally fed from wire supply feed assembly 16 by way of a stepper motor (not shown). In this manner, exact lengths of wire material may be repetitively fed into longitudinal bore 37 of fixed cutting tool element 36 and through longitudinal bore 55 of movable cutting tool element 54. Once the desired length of the blank has been inserted into longitudinal bore of movable cutting tool element 54, high velocity impact press 12 is activated. Motion plate 20 thereby impacts strike plate 58 and transfers a force to cutting tool assembly 14 sufficient to form the needle blank. The impact force causes movable platform 40 and, consequently, movable cutting tool element 54, to displace downward and the portion of wire stock 62 contained in longitudinal bore 55 to break away from the supply (Fig. 5B).

In a preferred embodiment, the stroke length of motion plate 20 may be adjusted to cause movable cutting tool element 54 to be displaced just slightly greater than the diameter of the wire stock being cut. One displacement that has been found to be effective is 0.001 inch greater than the diameter of the wire stock. After one cycle is performed and a needle blank is formed, the stepper motor advances a supply of wire 62 forward through fixed cutting tool element 36 thereby ejecting the newly formed needle blank from longitudinal bore of movable cutting tool element 54. The ejected needle blanks may be collected in a tray or fed, for example, to a conveyer system for collection at a later point. The timing of the stepper motor and the operation of high velocity impact press 14 may be synchronized by way of programmable logic circuitry in order to optimize the production output of apparatus 10.

The claims which follow identify embodiments of the invention additional to those described in detail above.

## Claims

1. Apparatus for cutting needle blanks from wire stock comprising:
(a) a cutting tool assembly having first and second support members being movable relative to each other;
(b) first cutting tool element retained in said first support member and having a longitudinal bore therein configured and dimensioned to receive a length of wire stock; and
(c) second cutting tool element disposed in said second support member and having a longitudinal bore therein;
wherein said first and second cutting tool elements are movable between a receiving position wherein said longitudinal bores of said first and second tool elements are in substantial axial alignment defining a continuous wire path therethrough and a sheared position wherein said longitudinal bores define parallel discontinuous passages, said first and second cutting elements being transversely movable in response to impact forces supplied to said first and second support members sufficient such that said first and second support members are moved to said sheared position.

2. Apparatus for cutting needle blanks from wire stock comprising:
(a) a cutting tool assembly having a fixed support member and a movable support member;
(b) first cutting tool element retained in said fixed support member and having a longitudinal bore therein configured and dimensioned to receive a length of wire stock; and
(c) second cutting tool element disposed in said movable support member and having a longitudinal bore therein, said second cutting tool element being movable between a receiving position wherein said longitudinal bores of said first and second tool elements are in substantial axial alignment defining a continuous wire path therethrough and a sheared position wherein said longitudinal bores define parallel discontinuous passages, said second cutting element being transversely movable in response to an impact supplied to said movable support member sufficient such that said movable support member is moved to said sheared position.

3. Apparatus for cutting needle blanks from wire stock comprising:
(a) an impact means;
(b) a cutting tool assembly mounted adjacent said impact means and positioned in impactable alignment with said impact means, said cutting tool assembly having a fixed support member and a movable support member;
(c) first cutting tool element retained in said fixed support member and having a longitudinal bore therein configured and dimensioned to receive a length of wire stock; and
(d) second cutting tool element disposed in said movable support member and having a longitudinal bore therein, said second cutting tool element being movable between a receiving position wherein said longitudinal bores of said first and second tool elements are in substantial axial alignment defining a continuous wire path therethrough and a sheared position wherein said longitudinal bores define parallel discontinuous passages, said second cutting element being movable in response to impacting contact between said impact means and said movable support member.

4. Apparatus for cutting needle blanks from wire stock comprising:
(a) an impact press having a base portion and an impact portion;
(b) a cutting tool assembly mounted to said base portion and positioned in impactable alignment with said impact portion of said impact press, said cutting tool assembly having a fixed support member and a movable support member;
(c) first cutting tool element retained in said fixed support member and having a longitudinal bore therein configured and dimensioned to receive a length of wire stock; and
(d) second cutting tool element disposed in said movable support member and having a longitudinal bore therein, said second cutting tool element being movable between a receiving position wherein said longitudinal bores of said first and second tool elements are in substantial axial alignment defining a continuous wire path therethrough and a sheared position wherein said longitudinal bores define parallel discontinuous passages, said second cutting element being movable transversely in response to impacting contact between said impact portion of said impact press and said movable support member.

5. Apparatus as claimed in any one of the preceding claims further comprising wire stock feeding means for sequentially feeding a length of wire stock a predetermined distance into said bore of said first cutting element.

6. Method for forming needle blanks from wire stock comprising the steps of:
(a) providing a cutting tool assembly having:
(i) first and second support members being movable relative to each other;
(ii) first cutting tool element retained in said first support member and having a longitudinal bore therein configured and dimensioned to receive a length of wire stock; and
(iii)second cutting tool element disposed in said second support member and having a longitudinal bore therein;
wherein said first and second cutting tool elements are movable between a receiving position wherein said longitudinal bores of said first and second tool elements are in substantial axial alignment defining a continuous wire path therethrough and a sheared position wherein said longitudinal bores define parallel discontinuous passages, said first and second cutting elements being movable in response to impact forces supplied to said first and second support members sufficient such that said first and second support members are moved to said sheared position;
(b) inserting a length of wire stock a predetermined distance into said elongated bore; and
(c) imparting an impact force on said first and second cutting tool elements sufficient such that said first and second cutting tools are moved to said sheared position.

7. A method according to claim 6 which includes the further step of periodically replacing the cutting tool elements.

8. A method according to claims 6 or 7 which includes the step of maintaining between the wire stock and the bores in the respective cutting tools on clearance which is at least 0,0001 inch and not more than 0,0010 inch.
